# EUROPEAN PATENT SPECIFICATION

(11) **EP 3 208 745 B1**
(45) Date of publication and mention of the grant of the patent: **19.08.2020**
(21) Application number: 17157179.7
(22) Date of filing: 21.02.2017
(51) Int. Cl.: G06K 9/46, G06K 9/00

(54) **METHOD AND APPARATUS FOR IDENTIFYING PICTURE TYPE**
VERFAHREN UND VORRICHTUNG ZUR IDENTIFIZIERUNG VON BILDTYPEN
PROCÉDÉ ET APPAREIL PERMETTANT D'IDENTIFIER UN TYPE D'IMAGE

(30) Priority: 22.02.2016 CN 201610097153
(43) Date of publication of application: 23.08.2017
(73) Proprietor: Beijing Xiaomi Mobile Software Co., Ltd., Beijing 100085 (CN)
(72) Inventor: LI, Guosheng, Beijing 100085 (CN); DAI, Lin, Beijing 100085 (CN); HUANG, Jiangtao, Beijing 100085 (CN)
(74) Representative: Cabinet Beau de Loménie

(56) References cited:
- US-A1- 2002 031 268
- Giovanni Maria Farinella ET AL: "Representation Models and Machine Learning Techniques for Scene Classification", , 1 May 2012 (2012-05-01), pages 1-17, XP055379450, Retrieved from the Internet: URL:https://www.researchgate.net/profile/G iovanni_Farinella/publication/228943067_Re presentation_Models_and_Machine_Learning_T echniques_for_Scene_Classification/links/0 deec520ba3c284099000000/Representation-Mod els-and-Machine-Learning-Techniques-for-Sc ene-Classification.pdf [retrieved on 2017-06-08]

## Description

### TECHNICAL FIELD

The present invention generally relates to the field of communication technology, and more particularly, to a method and apparatus for identifying picture type.

### BACKGROUND

Pictures displayed on display devices may be generally divided into two types: one type of pictures comprises artificially composited pictures, which are called composite pictures, and the other type of pictures comprises pictures existing in natural world, which are called nature pictures. In general, a composite picture is a picture manually plotted (i.e. drawn) with contents being in conformity with characteristics of a display device, for example, a beautiful picture is plotted according to a bit depth, a color gamut and a contrast ratio which can be displayed by the display device. For example, a composite picture is a computer-generated picture artificially synthetized by a user using a computer, such as an application's icon, etc. The nature picture generally exhibits things really existing in the natural world, without processing with respect to the characteristics of a specific display device. In other words, a nature picture is a picture which has been acquired by a picture acquiring device, for example a camera. Thereby, the nature picture may be processed by using a specific image processing technique in a later stage so as to make the nature picture more beautiful. However, if the composite picture is processed in a later stage, the beauty of the composite picture may be destroyed.

Therefore, before performing a post processing on the picture, it is necessary to identify the type of the picture, and then determine whether to execute an operation, such as a post processing, to the picture according to the type of the picture, thereby keeping the beauty of the picture.

At present, the type of the picture may be identified by adopting a manner of calculating an entropy of the picture. If the entropy of the picture is greater than a preset threshold value, it may be determined that the picture is a nature picture; and if the entropy of the picture is smaller than or equal to the preset threshold value, it may be determined that the picture is a composite picture. However, with such identifying manner, the calculation volume for the data is enormous, thereby such identifying manner is not suitable for identifying types of pictures on the mobile terminal, such as a mobile phone.

Further background art can be found in US 2002/031268 A1 which discloses classifying images between natural pictures and synthetic graphics.

### SUMMARY

In order to solve the problems existing in the related art, the present invention is set out as defined in the appended claims.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for identifying picture type, according to an exemplary embodiment.
Fig. 2a is a first schematic diagram of a histogram of a red channel of a picture to be identified, according to an exemplary embodiment.
Fig. 2b is a first schematic diagram of a histogram of a green channel of the picture to be identified, according to an exemplary embodiment.
Fig. 2c is a first schematic diagram of a histogram of a blue channel of the picture to be identified, according to an exemplary embodiment.
Fig. 3a is a second schematic diagram of a histogram of the red channel of the picture to be identified, according to an exemplary embodiment.
Fig. 3b is a second schematic diagram of a histogram of the green channel of the picture to be identified, according to an exemplary embodiment.
Fig. 3c is a second schematic diagram of a histogram of the blue channel of the picture to be identified, according to an exemplary embodiment.
Fig. 4 is a flow chart of another method for identifying picture type, according to an exemplary embodiment.
Fig. 5 is a flow chart of another method for identifying picture type, according to an exemplary embodiment.
Fig. 6 is a block diagram of an apparatus for identifying picture type, according to an exemplary embodiment.
Fig. 7 is a block diagram of another apparatus for identifying picture type, according to an exemplary embodiment.
Fig. 8 is a block diagram of another apparatus for identifying picture type, according to an exemplary embodiment.
Fig. 9 is a block diagram of another apparatus for identifying picture type, according to an exemplary embodiment.
Fig. 10 is a block diagram of an apparatus suitable for identifying picture type, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

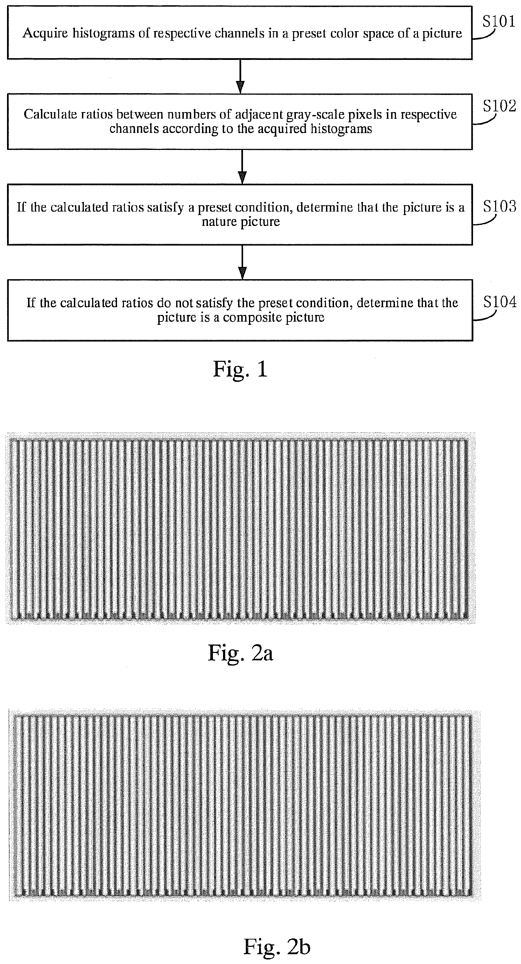

Fig. 1 is a flow chart of a method for identifying picture type, according to an exemplary embodiment. As shown in Fig. 1, the method for identifying picture type may be performed by a mobile terminal, and the mobile terminal may include, but is not limited to a terminal device, such as a mobile phone, and a tablet computer (PAD). The method includes the following steps S101-S104.

In step S101, histograms of respective channels in a preset color space of a picture to be identified are acquired.

In this embodiment, different types of pictures have different characteristics in the histograms of respective channels in the preset color space. Thereby, the type of the picture may be identified by analyzing the characteristics of the histograms.

The preset color space may be a color space, such as a Red-Green-Blue (RGB) color space, or a luminance (LAB) color space.

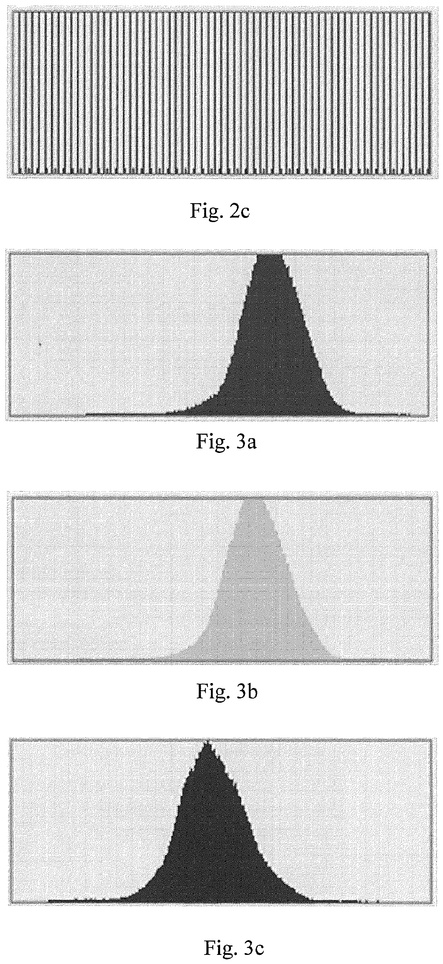

For example, histograms of respective channels in the RGB color space of the picture to be identified may be acquired. An example of the histograms of three RGB channels of the picture to be identified may be as shown in Figs. 2a-2c, or an example of the histograms of three RGB channels of the picture to be identified may be as shown in Figs. 3a-3c.

The abscissa axis of the histograms indicates 0∼255 gray-scale values, and the vertical axis thereof indicates a number of corresponding gray-scale pixels.

In step S102, ratios between numbers of adjacent gray-scale pixels in respective channels are calculated according to the acquired histograms.

In this embodiment, the ratios between numbers of adjacent gray-scale pixels in respective channels of the picture may be calculated according to the acquired histograms.

For example, the ratios between numbers of adjacent gray-scale pixels in three Red-Green-Blue channels may be calculated according to the histograms shown in Figs. 2a-2c, or the histograms shown in Figs. 3a-3c.

In this embodiment, the manner for calculating the ratios between numbers of adjacent gray-scale pixels in respective channels may be as follows:
with respect to individual channels, respectively calculating a ratio between a number of the i^{th} gray-scale pixels and a number of the (i-n)^{th} gray-scale pixels, and a ratio between a number of the i^{th} gray-scale pixels and a number of the (i+n)^{th} gray-scale pixels in a current channel, wherein n≤i≤255-n, 1≤n≤10, and both i and n are integer. A preferred value of n may be 1-5.

For example, the following ratios in the red channel may be calculated: a ratio between a number of the 1^{st} gray-scale pixels and a number of the 0^{th} gray-scale pixels, and a ratio between the number of the 1^{st} gray-scale pixels and a number of the 2^{nd} gray-scale pixels, a ratio between the number of the 2^{nd} gray-scale pixels and the number of the 1^{st} gray-scale pixels, and a ratio between the number of the 2^{nd} gray-scale pixels and a number of the 3^{rd} gray-scale pixels, a ratio between the number of the 3^{rd} gray-scale pixels and the number of the 2^{nd} gray-scale pixels, and a ratio between the number of the 3^{rd} gray-scale pixels and a number of the 4^{th} gray-scale pixels, ..., a ratio between the number of the 254^{th} gray-scale pixels and the number of the 253^{rd} gray-scale pixels, and a ratio between the number of the 254^{th} gray-scale pixels and a number of the 255^{th} gray-scale pixels.

Assuming that in the histogram of the red channel shown in Fig. 3a, there are 1624 pixels of 89^{th} gray-scale, 1609 pixels of 90^{th} gray-scale, and 1554 pixels of 91^{st} gray-scale, then a ratio between the 90^{th} gray-scale pixels and the 89^{th} gray-scale pixels is 0.9907635, and a ratio between the 90^{th} gray-scale pixels and the 91^{st} gray-scale pixels is 1.03539253.

In step S103, if the calculated ratio satisfies a preset condition, it is determined that the picture to be identified is a nature picture.

In this embodiment, when the preset color space is RGB, the preset condition may be: a number of decimal places of the ratio exceeds 5.

If the calculated ratio satisfies a preset condition, i.e., the number of decimal places of the calculated ratio exceeds 5, then the picture to be identified is a nature picture.

Continuing to describe by using the above example, since the ratio between the 90^{th} gray-scale pixels and the 89^{th} gray-scale pixels is 0.9907635, and the ratio between the 90^{th} gray-scale pixels and the 91^{st} gray-scale pixels is 1.03539253, the numbers of decimal places of both ratios exceed 5, thereby it may be determined preliminarily that the picture corresponding to Fig. 3a is a nature picture. If the numbers of decimal places of the numbers of the ratios between adjacent gray-scale pixels in the histograms shown in Figs. 3b-3c also exceed 5, then it can be determined that the picture corresponding to Figs. 3a-3c is a nature picture.

In step S104, if the calculated ratio does not satisfy the preset condition, it is determined that the picture to be identified is a composite picture.

In this embodiment, if the calculated ratio does not satisfy the preset condition, i.e., the calculated ratio is an integer or the number of decimal places of the calculated ratio does not exceed 5, then the picture to be identified is a composite picture.

Assuming that in the histogram of the red channel shown in Fig. 2a, a ratio between the 1^{st} gray-scale pixels and the 0^{th} gray-scale pixels is 0.01, and a ratio between the 1^{st} gray-scale pixels and the 2^{nd} gray-scale pixels is 100, since the calculated ratios do not satisfy the preset condition, it may be determined preliminarily that the picture corresponding to Fig. 2a is a composite picture. If the numbers of decimal places of the ratios between the numbers of adjacent gray-scale pixels in the histograms shown in Figs. 2b-2c do not satisfy the preset condition either, then the picture corresponding to Figs. 2a-2c can be determined as a composite picture.

In this embodiment, in order to improve accuracy rate of identifying picture type, the method further includes: performing a statistics on a number of the ratios which do not satisfy the preset condition; and if the number of the ratios exceeds a preset number, determining the picture to be identified as the composite picture. The preset number may be set flexibly according to requirements, for example, may be 6, or 8, or the like.

On the assumption that in the histograms of three channels shown in Figs. 2a-2c, the number of the ratios which do not satisfy the preset condition is 508, then it may be further determined that the picture corresponding to Figs. 2a-2c is the composite picture.

In the above embodiments of the method for identifying picture type, by acquiring histograms of respective channels in a preset color space of a picture to be identified; calculating ratios between numbers of adjacent gray-scale pixels in respective channels according to the acquired histograms; and then determining the type of the picture to be identified according to whether the ratio satisfies a preset condition, no large number of computations is needed during the entire identifying procedure, thus the present invention may be suitable for identifying picture type in the mobile terminal, such as the mobile phone, and has a strong applicability.

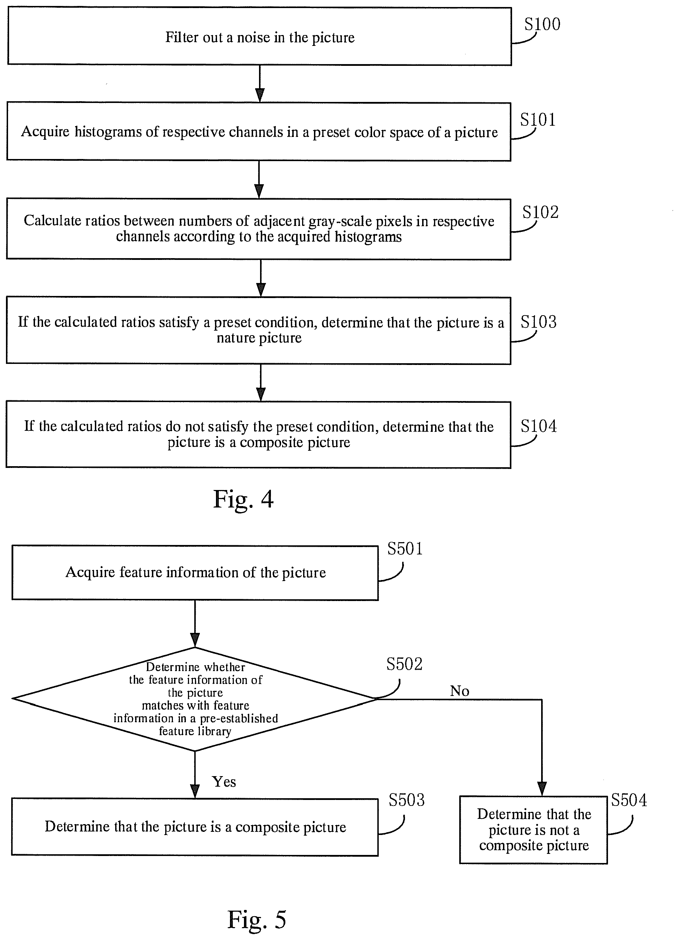

Fig. 4 is a flow chart of another method for identifying picture type, according to an exemplary embodiment. As shown in Fig. 4, before the above step S101, the method further includes the following step.

In step S100, a noise in the picture to be identified is filtered out.

The noise in the picture mainly refers to a rough part in the picture generated when a sensor of a camera deems a light ray as a receiving signal and outputs the light ray, or refers to a foreign pixel, which is generally generated by electronic interferences and should not exist in the picture.

In this embodiment, before acquiring the histograms of respective channels in the preset color space of the picture to be identified, the noise in the picture to be identified may be firstly filtered out, in this way, the acquired histograms may be more accurate, and the accuracy rate of identifying picture type is thus improved.

In the above embodiment of the method for identifying picture type, by filtering out the noise in the picture to be identified, the acquired histograms are more accurate, and the accuracy rate of identifying picture type is thus improved.

Fig. 5 is a flow chart of another method for identifying picture type, according to an exemplary embodiment. As shown in Fig. 5, the method may further include the following steps.

In step S501, feature information of the picture to be identified is acquired.

In this embodiment, a feature library of the composite picture may be established in advance. The feature library includes feature information belonging to the composite picture. Thereby, by acquiring the feature information of the picture to be identified, and comparing the acquired feature information with the feature library, it is possible to identify whether the picture to be identified is a composite picture.

The feature library may include, but is not limited to one or several kinds of the following feature information: feature information of pixel numbers in three channels of RGB of the composite picture, feature information of monochrome image of the composite picture, and the like.

In this embodiment, for being compared with the feature information in the feature library, the feature information of pixel numbers in three RGB channels of the picture to be identified may be acquired, or the feature information of red image of picture to be identified may be acquired.

In step S502, whether the feature information of the picture to be identified is matched with feature information in a pre-established feature library is determined; and if they are matched, step S503 is performed; otherwise, step S504 is performed.

In step S503, the picture to be identified is determined as the composite picture, and the procedure ends.

On the assumption that Figs. 2a-2c show the histograms of three RGB channels of the picture to be identified, from Figs. 2a-2c, it can be seen that the histograms of three RGB channels of the picture to be identified are identical, thereby it can be acquired that the pixel numbers of three RGB channels of the picture to be identified are identical, i.e., feature information of the picture is matched with the feature information in the feature library, thus it may be determined that the picture to be identified is the composite picture.

In step S504, it is determined that the picture to be identified is not the composite picture.

In this embodiment, if the feature information of the picture to be identified is not matched with the feature information in the pre-established feature library, it may be determined that the picture to be identified is not the composite picture.

It should be explained that in addition to using this manner to identify the picture type, it is also possible to use this manner to correct the already identified picture type. For example, assuming that the current picture has been identified as the composite picture before, it is possible to further determine whether the picture is the composite picture by acquiring the feature information of the picture and comparing the feature information with the feature information in the feature library, so as to greatly improve the accurate rate of identification.

In the above embodiment of method for identifying picture type, whether the picture to be identified is the composite picture is determined by determining whether the acquired feature information in the picture to be identified is matched with the feature information in the pre-established feature library, a manner for identifying the composite picture is further provided, such that the manners for identifying picture type are diversified, and it is also possible to correct the identified picture type, thereby greatly improving the accuracy rate of identification.

Corresponding to the above method embodiments for identifying picture type, the present invention also provides apparatus embodiments for identifying picture type.

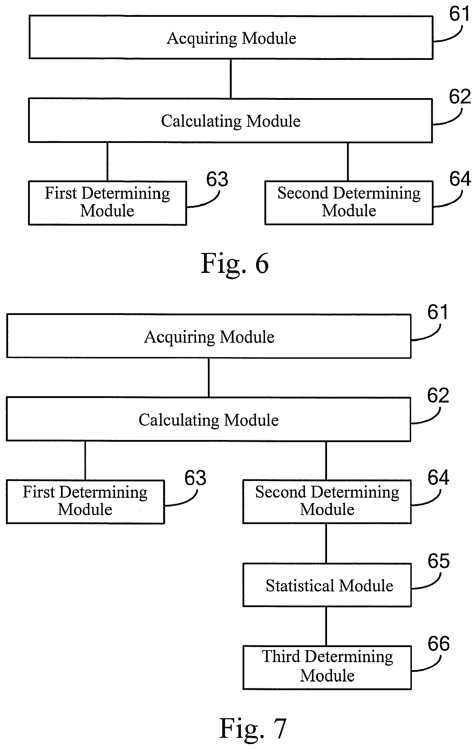

Fig. 6 is a block diagram of an apparatus for identifying picture type, according to an exemplary embodiment. As shown in Fig. 6, the apparatus for identifying picture type includes: an acquiring module 61, a calculating module 62, a first determining module 63, and a second determining module 64.

The acquiring module 61 is configured to acquire histograms of respective channels in a preset color space of a picture to be identified.

In this embodiment, different types of pictures have different characteristics in the histograms of respective channels in the preset color space. Thereby, the type of the picture may be identified by analyzing the characteristics of the histogram.

The preset color space may be a color space, such as a Red-Green-Blue (RGB) color space, or a luminance (LAB) color space.

For example, histograms of respective channels in the RGB color space of the picture to be identified may be acquired. An example of the histograms of three RGB channels of the picture to be identified may be as shown in Figs. 2a-2c, or an example of the histograms of three RGB channels of the picture to be identified may be as shown in Figs. 3a-3c.

The abscissa axis of the histograms indicates 0∼255 gray-scale values, and the vertical axis thereof indicates a number of corresponding gray-scale pixels.

The calculating module 62 is configured to calculate ratios between numbers of adjacent gray-scale pixels in respective channels according to the histograms acquired by the acquiring module 61.

In this embodiment, the ratios between numbers of adjacent gray-scale pixels in respective channels of the picture may be calculated according to the acquired histograms.

For example, the ratios between numbers of adjacent gray-scale pixels in three Red-Green-Blue channels may be calculated according to the histograms shown in Figs. 2a-2c, or the histograms shown in Figs. 3a-3c.

In this embodiment, the manner for calculating the ratios between numbers of adjacent gray-scale pixels in respective channels may be as follows:
with respect to individual channels, respectively calculating a ratio between a number of the i^{th} gray-scale pixels and a number of the (i-n)^{th} gray-scale pixels, and a ratio between a number of the i^{th} gray-scale pixels and a number of the (i+n)^{th} gray-scale pixels in a current channel, wherein n≤i≤255-n, 1≤n≤10, and both i and n are integer. A preferred value of n may be 1-5.

For example, the following ratios in the red channel may be calculated: a ratio between a number of the 1^{st} gray-scale pixels and a number of the 0^{th} gray-scale pixels, and a ratio between the number of the 1^{st} gray-scale pixels and a number of the 2^{nd} gray-scale pixels, a ratio between the number of the 2^{nd} gray-scale pixels and the number of the 1^{st} gray-scale pixels, and a ratio between the number of the 2^{nd} gray-scale pixels and a number of the 3^{rd} gray-scale pixels, a ratio between the number of the 3^{rd} gray-scale pixels and the number of the 2^{nd} gray-scale pixels, and a ratio between the number of the 3^{rd} gray-scale pixels and a number of the 4^{th} gray-scale pixels, ..., a ratio between the number of the 254^{th} gray-scale pixels and the number of the 253^{rd} gray-scale pixels, and a ratio between the number of the 254^{th} gray-scale pixels and a number of the 255^{th} gray-scale pixels.

Assuming that in the histogram of the red channel shown in Fig. 3a, there are 1624 pixels of 89^{th} gray-scale, 1609 pixels of 90^{th} gray-scale, and 1554 pixels of 91^{st} gray-scale, then a ratio between the 90^{th} gray-scale pixels and the 89^{th} gray-scale pixels is 0.9907635, and a ratio between the 90^{th} gray-scale pixels and the 91^{st} gray-scale pixels is 1.03539253.

The first determining module 63 is configured to, if the ratio calculated by the calculating module 62 satisfies a preset condition, determine the picture to be identified as a nature picture.

In this embodiment, when the preset color space is RGB, the preset condition may be: a number of decimal places of the ratio exceeds 5.

If the calculated ratio satisfies a preset condition, i.e., the number of decimal places of the calculated ratio exceeds 5, then the picture to be identified is a nature picture.

Continuing to describe by using the above example, since the ratio between the 90^{th} gray-scale pixels and the 89^{th} gray-scale pixels is 0.9907635, and the ratio between the 90^{th} gray-scale pixels and the 91^{st} gray-scale pixels is 1.03539253, the numbers of decimal places of both ratios exceed 5, thereby it may be determined preliminarily that the picture corresponding to Fig. 3a is a nature picture. If the numbers of decimal places of the numbers of the ratios between adjacent gray-scale pixels in the histograms shown in Figs. 3b-3c also exceed 5, then it can be determined that the picture corresponding to Figs. 3a-3c is a nature picture.

The second determining module 64 is configured to, if the ratio calculated by the calculating module 62 does not satisfy the preset condition, determine the picture to be identified as a composite picture.

In this embodiment, if the calculated ratio does not satisfy the preset condition, i.e., the calculated ratio is an integer or the number of decimal places of the calculated ratio does not exceed 5, then the picture to be identified is a composite picture.

Assuming that in the histogram of the red channel shown in Fig. 2a, a ratio between the 1^{st} gray-scale pixels and the 0^{th} gray-scale pixels is 0.01, and a ratio between the 1^{st} gray-scale pixels and the 2^{nd} gray-scale pixels is 100, since the calculated ratios do not satisfy the preset condition, it may be determined preliminarily that the picture corresponding to Fig. 2a is a composite picture. If the numbers of decimal places of the ratios between the numbers of adjacent gray-scale pixels in the histograms shown in Figs. 2b-2c do not satisfy the preset condition either, then it can be determined that the picture corresponding to Figs. 2a-2c is a composite picture.

The apparatus shown in Fig. 6 is used for implementing the method procedure shown in Fig. 1, and the involved relevant contents are similar, which are not elaborated herein.

In the above embodiments of the apparatus for identifying picture type, by acquiring histograms of respective channels in a preset color space of a picture to be identified; calculating ratios between numbers of adjacent gray-scale pixels in respective channels according to the acquired histograms; and then determining the type of the picture to be identified according to whether the ratio satisfies a preset condition, no large number of computations is needed during the entire identifying procedure, thus the present invention may be suitable for identifying picture type in the mobile terminal, such as the mobile phone, and has a strong applicability.

Fig. 7 is a block diagram of another apparatus for identifying picture type, according to an exemplary embodiment. As shown in Fig. 7, based on the above embodiment shown in Fig. 6, the apparatus may further include: a statistical module 65 and a third determining module 66.

The statistical module 65 is configured to perform a statistics on a number of the ratios which do not satisfy the preset condition.

The third determining module 66 is configured to, if the number of the ratios obtained by the statistical module 65 exceeds a preset number, determine the picture to be identified as the composite picture.

In this embodiment, in order to improve accuracy rate of identifying picture type, the method further includes: performing a statistics on a number of the ratios which do not satisfy the preset condition; and if the number of the ratios exceeds a preset number, determining the picture to be identified as the composite picture. The preset number may be set flexibly according to requirements, for example, may be 6, or 8, or the like.

On the assumption that in the histograms of three channels shown in Figs. 2a-2c, the number of the ratios which do not satisfy the preset condition is 508, then it may be further determined that the picture corresponding to Figs. 2a-2c is the composite picture.

The apparatus shown in Fig. 7 is used for implementing the method procedure shown in Fig. 1, and the involved relevant contents are similar, which are not elaborated herein.

In the above embodiments of apparatus for identifying picture type, when the statistical number of the ratios exceeds the preset number, it is determined that the picture to be identified is the composite picture, thereby the accuracy rate of identifying picture type may be improved.

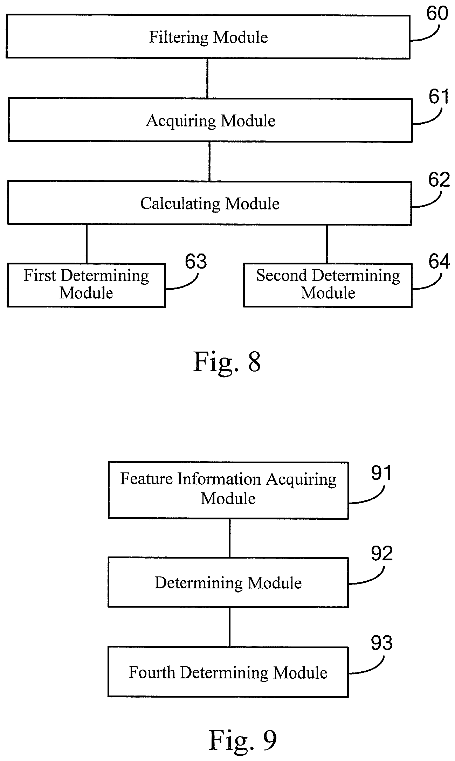

Fig. 8 is a block diagram of another apparatus for identifying picture type, according to an exemplary embodiment. As shown in Fig. 8, based on the above embodiment shown in Fig. 6, the apparatus may further include a filtering module 60.

The filtering module 60 is configured to, before acquiring the histograms of respective channels in the preset color space of the picture to be identified by the acquiring module 61, filter out a noise in the picture to be identified.

The noise in the picture mainly refers to a rough part in the picture generated when a sensor of a camera deems a light ray as a receiving signal and outputs the light ray, or refers to a foreign pixel, which is generally generated by electronic interferences and should not exist in the picture.

In this embodiment, before acquiring the histograms of respective channels in the preset color space of the picture to be identified, the noise in the picture to be identified may be filtered out firstly, in this way, the acquired histograms may be more accurate, and the accuracy rate of identifying picture type is thus improved.

The apparatus shown in Fig. 8 is used for implementing the method procedure shown in Fig. 4, and the involved relevant contents are similar, which are not elaborated herein.

In the above embodiment of the apparatus for identifying picture type, by filtering out the noise in the picture to be identified, the acquired histograms are more accurate, and the accuracy rate of identifying picture type is thus improved.

Fig. 9 is a block diagram of another apparatus for identifying picture type, according to an exemplary embodiment. As shown in Fig. 9, based on the above embodiment shown in Fig. 6, the apparatus may further include: a feature information acquiring module 91, a determining module 92, and a fourth determining module 93.

The feature information acquiring module 91 is configured to acquire feature information of the picture to be identified.

In this embodiment, a feature library of the composite picture may be established in advance. The feature library includes feature information belonging to the composite picture. Thereby, by acquiring the feature information of the picture to be identified, and comparing the acquired feature information with the feature library, it is possible to identify whether the picture to be identified is a composite picture.

The feature library may include, but is not limited to one or several kinds of the following feature information: feature information of pixel numbers in three channels of RGB of the composite picture, feature information of monochrome image of the composite picture, and the like.

In this embodiment, for being compared with the feature information in the feature library, the feature information of pixel numbers in three channels of RGB of the picture to be identified may be acquired, or the feature information of red image of picture to be identified may be acquired.

The determining module 92 is configured to determine whether the feature information of the picture to be identified acquired by the feature information acquiring module 91 is matched with feature information in a pre-established feature library, the feature library including feature information belonging to the composite picture.

The fourth determining module 93 is configured to, if the determining module 92 determines that they are matched, determine the picture to be identified as the composite picture.

On the assumption that Figs. 2a-2c show the histograms of three RGB channels of the picture to be identified, from Figs. 2a-2c, it can be seen that the histograms of three RGB channels of the picture to be identified are identical, thereby it can be acquired that the pixel numbers of three RGB channels of the picture to be identified are identical, i.e., feature information of the picture is matched with the feature information in the feature library, thus it may be determined that the picture to be identified is the composite picture.

In this embodiment, if the feature information of the picture to be identified is not matched with the feature information in the pre-established feature library, it may be determined that the picture to be identified is not the composite picture.

It should be explained that in addition to using this manner to identify the picture type, it is also possible to use this manner to correct the already identified picture type. For example, assuming that the current picture has been identified as the composite picture before, it is possible to further determine whether the picture is the composite picture by acquiring the feature information of the picture and comparing the feature information with the feature information in the feature library, so as to greatly improve the accurate rate of identification.

The apparatus shown in Fig. 9 is used for implementing the method procedure shown in Fig. 5, and the involved relevant contents are similar, which are not elaborated herein.

In the above embodiment of apparatus for identifying picture type, whether the picture to be identified is the composite picture is determined by determining whether the acquired feature information in the picture to be identified is matched with the feature information in the pre-established feature library, a manner for identifying the composite picture is further provided, such that the manners for identifying picture type are diversified, and it is also possible to correct the identified picture type, thereby greatly improving the accuracy rate of identification.

With respect to the apparatus in the above embodiments, the specific manners for performing operations for individual modules and submodules therein have been described in detail in the embodiments regarding the methods, which will not be elaborated herein.

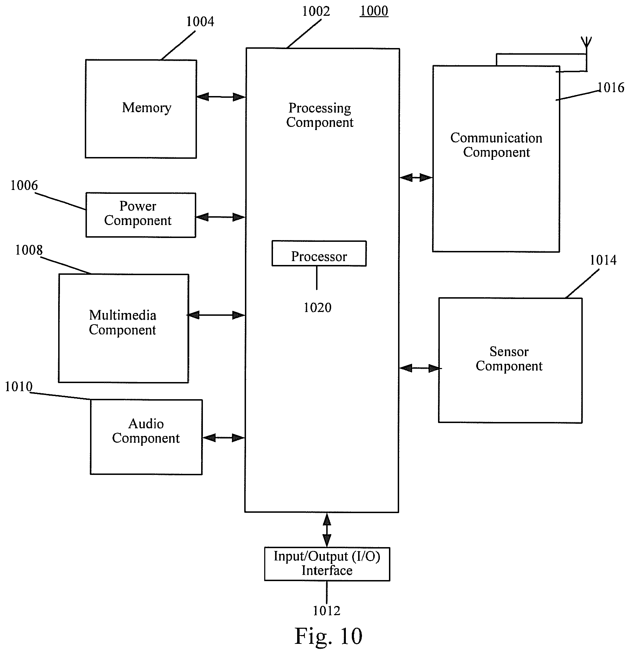

Fig. 10 is a block diagram of a device 1000 suitable for identifying picture type, according to an exemplary embodiment. For example, the device 1000 may be a mobile phone, a computer, a digital broadcast terminal, a messaging device, a gaming console, a tablet, a medical device, exercise equipment, a personal digital assistant, an aircraft and the like.

Referring to Fig. 10, the device 1000 may include one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 typically controls overall operations of the device 1000, such as the operations associated with display, telephone calls, data communications, camera operations, and recording operations. The processing component 1002 may include one or more processors 1020 to execute instructions to perform all or part of the steps in the above described methods. Moreover, the processing component 1002 may include one or more modules which facilitate the interaction between the processing component 1002 and other components. For instance, the processing component 1002 may include a multimedia module to facilitate the interaction between the multimedia component 1008 and the processing component 1002.

The memory 1004 is configured to store various types of data to support the operation of the device 1000. Examples of such data include instructions for any applications or methods operated on the device 1000, contact data, phonebook data, messages, pictures, video, etc. The memory 1004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the device 1000. The power component 1006 may include a power management system, one or more power sources, and any other components associated with the generation, management, and distribution of power in the device 1000.

The multimedia component 1008 includes a screen providing an output interface between the device 1000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1008 includes a front camera and/or a rear camera. The front camera and/or the rear camera may receive an external multimedia datum while the device 1000 is in an operation mode, such as a photographing mode or a video mode. Each of the front camera and the rear camera may be a fixed optical lens system or have focus and optical zoom capability.

The audio component 1010 is configured to output and/or input audio signals. For example, the audio component 1010 includes a microphone ("MIC") configured to receive an external audio signal when the device 1000 is in an operation mode, such as a call mode, a recording mode, and a voice identification mode. The received audio signal may be further stored in the memory 1004 or transmitted via the communication component 1016. In some embodiments, the audio component 1010 further includes a speaker to output audio signals.

The I/O interface 1012 provides an interface between the processing component 1002 and peripheral interface modules, such as a keyboard, a click wheel, buttons, and the like. The buttons may include, but are not limited to, a home button, a volume button, a starting button, and a locking button.

The sensor component 1014 includes one or more sensors to provide status assessments of various aspects of the device 1000. For instance, the sensor component 1014 may detect an open/closed status of the device 1000, relative positioning of components, e.g., the display and the keypad, of the device 1000, a change in position of the device 1000 or a component of the device 1000, a presence or absence of user contact with the device 1000, an orientation or an acceleration/deceleration of the device 1000, and a change in temperature of the device 1000. The sensor component 1014 may include a proximity sensor configured to detect the presence of nearby objects without any physical contact. The sensor component 1014 may also include a light sensor, such as a CMOS or CCD image sensor, for use in imaging applications. In some embodiments, the sensor component 1014 may also include an accelerometer sensor, a gyroscope sensor, a magnetic sensor, a pressure sensor, or a temperature sensor.

The communication component 1016 is configured to facilitate communication, wired or wirelessly, between the device 1000 and other devices. The device 1000 can access a wireless network based on a communication standard, such as WiFi, 2G, or 3G, or a combination thereof. In one exemplary embodiment, the communication component 1016 receives a broadcast signal or broadcast associated information from an external broadcast management system via a broadcast channel. In one exemplary embodiment, the communication component 1016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 1004 including instructions, the above instructions are executable by the processor 1020 in the device 1000, for performing the above-described methods. For example, the non-transitory computer-readable storage medium may be a ROM, a RAM, a CD-ROM, a magnetic tape, a floppy disc, an optical data storage device, and the like.

## Claims

1. A method for identifying picture type, comprising:
acquiring (S101) histograms of respective channels in a preset color space of a picture;
calculating (S102) ratios between numbers of adjacent gray-scale pixels in the respective channels according to the histograms, wherein calculating (S102) the ratios between numbers of adjacent gray-scale pixels in the respective channels comprises:
with respect to an individual channel of the respective channels, calculating a ratio between a number of i^{th} gray-scale pixels and a number of (i-n)^{th} gray-scale pixels, and a ratio between a number of the i^{th} gray-scale pixels and a number of (i+n)^{th} gray-scale pixels in the individual channel, for all i in the range n≤i≤255-n, where 1≦n≦10, and where both i and n are integer;
when the ratios satisfy a preset condition, determining that the picture is a natural picture, wherein the preset color space comprises Red-Green-Blue (RGB) color space and a calculated ratio satisfies the preset condition when the calculated ratio includes a number of decimal places exceeding 5;
determining a number of the ratios which do not satisfy the preset condition; and
when the number of ratios which do not satisfy the preset condition exceeds a preset number, determining that the picture is an artificial picture.

2. The method for identifying picture type of claim 1, further comprising:
before acquiring (S101) the histograms of respective channels in the preset color space of the picture, filtering out (S100) a noise in the picture.

3. The method for identifying picture type of any of claims 1 and 2, further comprising:
acquiring (S501) feature information of the picture;
determining (S502) whether the feature information of the picture matches with feature information in a pre-established feature library, the feature library comprising feature information belonging to an artificial picture; and
when they match, determining (S503) that the picture is an artificial picture.

4. An apparatus for identifying picture type, comprising:
an acquiring module (61) configured to acquire histograms of respective channels in a preset color space of a picture;
a calculating module (62) configured to calculate ratios between numbers of adjacent gray-scale pixels in the respective channels according to the histograms acquired by the acquiring module (61), wherein the calculating module (62) is configured to:
with respect to an individual channel of the respective channels, calculate a ratio between a number of i^{th} gray-scale pixels and a number of (i-n)^{th} gray-scale pixels, and a ratio between a number of the i^{th} gray-scale pixels and a number of (i+n)^{th} gray-scale pixels in the individual channel, for all i in the range n≤i≤255-n, where 1≤n≤10, and where both i and n are integer;
a first determining module (63) configured to, when the ratios calculated by the calculating module (62) satisfy a preset condition, determine that the picture is a natural picture, wherein the preset color space comprises Red-Green-Blue (RGB) color space and a calculated ratio satisfies the preset condition when the calculated ratio includes a number of decimal places exceeding 5;
a statistical module (65) configured to determine a number of the ratios which do not satisfy the preset condition; and
a third determining module (66) configured to, when the number of the ratios obtained by the statistical module (65) exceeds a preset number, determine that the picture is an artificial picture.

5. The apparatus for identifying picture type of claim 4, further comprising:
a filtering module (60) configured to, before acquiring the histograms of respective channels in the preset color space of the picture by the acquiring module (61), filter out a noise in the picture.

6. The apparatus for identifying picture type of any one of claims 4 and 5, further comprising:
a feature information acquiring module (91) configured to acquire feature information of the picture;
a determining module (92) configured to determine whether the feature information of the picture acquired by the feature information acquiring module (91) matches with feature information in a pre-established feature library, the feature library comprising feature information belonging to an artificial picture; and
a fourth determining module (93) configured to, when the determining module (92) determines that they match, determine that the picture is an artificial picture.

7. A computer program, which when executing on a processor of a terminal device, performs a method according to any one of claims 1 to 3.

## Patentansprüche

1. Verfahren zum Identifizieren eines Bildtyps, umfassend:
Erlangen (S101) von Histogrammen von jeweiligen Kanälen in einem voreingestellten Farbraum eines Bilds,
Berechnen (S102) von Verhältnissen zwischen Anzahlen von benachbarten Graustufenpixeln in den jeweiligen Kanälen gemäß den Histogrammen, wobei das Berechnen (S102) der Verhältnisse zwischen Anzahlen von benachbarten Graustufenpixeln in den jeweiligen Kanälen umfasst:
in Bezug auf einen einzelnen Kanal der jeweiligen Kanäle Berechnen eines Verhältnisses zwischen einer Anzahl von i-ten Graustufenpixeln und einer Anzahl von (i - n)-ten Graustufenpixeln und eines Verhältnisses zwischen einer Anzahl der i-ten Graustufenpixel und einer Anzahl von (i + n)-ten Graustufenpixeln in dem einzelnen Kanal für alle i im Bereich von n ≤ i ≤ 255 - n, wobei 1 ≤ n ≤ 10, und wobei sowohl i als auch n ganze Zahlen sind,
wenn die Verhältnisse eine voreingestellte Bedingung erfüllen, Bestimmen, dass das Bild ein natürliches Bild ist, wobei der voreingestellte Farbraum einen Rot-Grün-Blau(RGB)-Farbraum umfasst und ein berechnetes Verhältnis die voreingestellte Bedingung erfüllt, wenn das berechnete Verhältnis eine Anzahl von Dezimalstellen beinhaltet, die 5 übersteigt,
Bestimmen einer Anzahl der Verhältnisse, welche die voreingestellte Bedingung nicht erfüllen, und
wenn die Anzahl von Verhältnissen, welche die voreingestellte Bedingung nicht erfüllen, eine voreingestellte Anzahl übersteigt, Bestimmen, dass das Bild ein künstliches Bild ist.

2. Verfahren zum Identifizieren eines Bildtyps nach Anspruch 1, ferner umfassend:
vor dem Erlangen (S101) der Histogramme von jeweiligen Kanälen in dem voreingestellten Farbraum des Bilds Herausfiltern (S100) eines Rauschens in dem Bild.

3. Verfahren zum Identifizieren eines Bildtyps nach einem der Ansprüche 1 und 2, ferner umfassend:
Erlangen (S501) von Merkmalsinformationen des Bilds,
Bestimmen (S502), ob die Merkmalsinformationen des Bilds mit Merkmalsinformationen in einer vorher erstellten Merkmalsbibliothek übereinstimmen, wobei die Merkmalsbibliothek Merkmalsinformationen umfasst, die zu einem künstlichen Bild gehören, und
wenn sie übereinstimmen, Bestimmen (S503), dass das Bild ein künstliches Bild ist.

4. Vorrichtung zum Identifizieren eines Bildtyps, umfassend:
ein Erlangungsmodul (61), das dazu ausgestaltet ist, Histogramme von jeweiligen Kanälen in einem voreingestellten Farbraum eines Bilds zu erlangen,
ein Berechnungsmodul (62), das dazu ausgestaltet ist, Verhältnisse zwischen Anzahlen von benachbarten Graustufenpixeln in den jeweiligen Kanälen gemäß den Histogrammen, die von dem Erlangungsmodul (61) erlangt werden, zu berechnen, wobei das Berechnungsmodul (62) ausgestaltet ist zum:
in Bezug auf einen einzelnen Kanal der jeweiligen Kanäle Berechnen eines Verhältnisses zwischen einer Anzahl von i-ten Graustufenpixeln und einer Anzahl von (i - n)-ten Graustufenpixeln und eines Verhältnisses zwischen einer Anzahl der i-ten Graustufenpixel und einer Anzahl von (i + n)-ten Graustufenpixeln in dem einzelnen Kanal für alle i im Bereich von n ≤ i ≤ 255 - n, wobei 1 ≤ n ≤ 10, und wobei sowohl i als auch n ganze Zahlen sind,
ein erstes Bestimmungsmodul (63), das dazu ausgestaltet ist, wenn die Verhältnisse, die von dem Berechnungsmodul (62) berechnet werden, eine voreingestellte Bedingung erfüllen, zu bestimmen, dass das Bild ein natürliches Bild ist, wobei der voreingestellte Farbraum einen Rot-Grün-Blau(RGB)-Farbraum umfasst und ein berechnetes Verhältnis die voreingestellte Bedingung erfüllt, wenn das berechnete Verhältnis eine Anzahl von Dezimalstellen beinhaltet, die 5 übersteigt,
ein statistisches Modul (65), das dazu ausgestaltet ist, eine Anzahl der Verhältnisse zu bestimmen, welche die voreingestellte Bedingung nicht erfüllen, und
ein drittes Bestimmungsmodul (66), das dazu ausgestaltet ist, wenn die Anzahl der Verhältnisse, die von dem statistischen Modul (65) erhalten wird, eine voreingestellte Anzahl übersteigt, zu bestimmen, dass das Bild ein künstliches Bild ist.

5. Vorrichtung zum Identifizieren eines Bildtyps nach Anspruch 4, ferner umfassend:
ein Filtermodul (60), das dazu ausgestaltet ist, vor dem Erlangen der Histogramme von jeweiligen Kanälen in dem voreingestellten Farbraum des Bilds durch das Erlangungsmodul (61) ein Rauschen in dem Bild herauszufiltern.

6. Vorrichtung zum Identifizieren eines Bildtyps nach einem der Ansprüche 4 und 5, ferner umfassend:
ein Merkmalsinformationserlangungsmodul (91), das dazu ausgestaltet ist, Merkmalsinformationen des Bilds zu erlangen,
ein Bestimmungsmodul (92), das dazu ausgestaltet ist, zu bestimmen, ob die Merkmalsinformationen des Bilds, die von dem Merkmalsinformationserlangungsmodul (91) erlangt werden, mit Merkmalsinformationen in einer vorher erstellten Merkmalsbibliothek übereinstimmen, wobei die Merkmalsbibliothek Merkmalsinformationen umfasst, die zu einem künstlichen Bild gehören, und
ein viertes Bestimmungsmodul (93), das dazu ausgestaltet ist, wenn das Bestimmungsmodul (92) bestimmt, dass sie übereinstimmen, zu bestimmen, dass das Bild ein künstliches Bild ist.

7. Computerprogramm, das bei Ausführung auf einem Prozessor eines Endgeräts ein Verfahren nach einem der Ansprüche 1 bis 3 durchführt.

## Revendications

1. Procédé d'identification de type d'image, comprenant les étapes ci-dessous consistant à :
acquérir (S101) des histogrammes de canaux respectifs dans un espace colorimétrique prédéfini d'une image ;
calculer (S102) des rapports entre des nombres de pixels d'échelle de gris adjacents dans les canaux respectifs selon les histogrammes, dans lequel l'étape de calcul (S102) des rapports entre les nombres de pixels d'échelle de gris adjacents dans les canaux respectifs comprend l'étape ci-dessous consistant à :
par rapport à un canal individuel des canaux respectifs, calculer un rapport entre un nombre de i^{ème} pixels d'échelle de gris et un nombre de (i-n)^{ième} pixels d'échelle de gris, et un rapport entre un nombre des i^{ème} pixels d'échelle de gris et un nombre de (i+n)^{ième} pixels d'échelle de gris dans le canal individuel, pour tous les « i » dans la plage n ≤ i ≤ 255-n, où 1 ≤ n ≤ 10, et où « i » et « n » sont deux nombres entiers ;
lorsque les rapports satisfont une condition prédéfinie, déterminer que l'image est une image naturelle, dans lequel l'espace colorimétrique prédéfini comprend l'espace colorimétrique Rouge-Vert-Bleu (RGB) et un rapport calculé satisfait la condition prédéfinie lorsque le rapport calculé inclut un nombre de décimales supérieur à 5 ;
déterminer un nombre des rapports qui ne satisfont pas la condition prédéfinie ; et
lorsque le nombre de rapports qui ne satisfont pas la condition prédéfinie dépasse un nombre prédéfini, déterminer que l'image est une image artificielle.

2. Procédé d'identification de type d'image selon la revendication 1, comprenant en outre l'étape ci-dessous consistant à :
avant d'acquérir (S101) les histogrammes de canaux respectifs dans l'espace colorimétrique prédéfini de l'image, filtrer (S100) un bruit dans l'image.

3. Procédé d'identification de type d'image selon l'une quelconque des revendications 1 et 2, comprenant en outre les étapes ci-dessous consistant à :
acquérir (S501) des informations de caractéristiques de l'image ;
déterminer (S502) si les informations de caractéristiques de l'image correspondent à des informations de caractéristiques d'une bibliothèque de caractéristiques préétablie, la bibliothèque de caractéristiques comprenant des informations de caractéristiques appartenant à une image artificielle ; et
lorsque lesdites informations correspondent, déterminer (S503) que l'image est une image artificielle.

4. Appareil destiné à identifier un type d'image, comprenant :
un module d'acquisition (61) configuré de manière à acquérir des histogrammes de canaux respectifs dans un espace colorimétrique prédéfini d'une image ;
un module de calcul (62) configuré de manière à calculer des rapports entre des nombres de pixels d'échelle de gris adjacents dans les canaux respectifs, selon les histogrammes acquis par le module d'acquisition (61), dans lequel le module de calcul (62) est configuré de manière à :
par rapport à un canal individuel des canaux respectifs, calculer un rapport entre un nombre de i^{ème} pixels d'échelle de gris et un nombre de (i-n)^{ième} pixels d'échelle de gris, et un rapport entre un nombre des i^{ème} pixels d'échelle de gris et un nombre de (i+n)^{ième} pixels d'échelle de gris dans le canal individuel, pour tous les « i » dans la plage n ≤ i ≤ 255-n, où 1 ≤ n ≤ 10, et où « i » et « n » sont deux nombres entiers ;
un premier module de détermination (63) configuré de manière à, lorsque les rapports calculés par le module de calcul (62) satisfont une condition prédéfinie, déterminer que l'image est une image naturelle, dans lequel l'espace colorimétrique prédéfini comprend l'espace colorimétrique Rouge-Vert-Bleu (RGB) et un rapport calculé satisfait la condition prédéfinie lorsque le rapport calculé inclut un nombre de décimales supérieur à 5 ;
un module statistique (65) configuré de manière à déterminer un nombre des rapports qui ne satisfont pas la condition prédéfinie ; et
un troisième module de détermination (66) configuré de manière à, lorsque le nombre des rapports obtenu par le module statistique (65) dépasse un nombre prédéfini, déterminer que l'image est une image artificielle.

5. Appareil destiné à identifier un type d'image selon la revendication 4, comprenant en outre :
un module de filtrage (60) configuré de manière à, avant d'acquérir les histogrammes de canaux respectifs dans l'espace colorimétrique prédéfini de l'image, par le biais du module d'acquisition (61), filtrer un bruit dans l'image.

6. Appareil destiné à identifier un type d'image selon l'une quelconque des revendications 4 et 5, comprenant en outre :
un module d'acquisition d'informations de caractéristiques (91) configuré de manière à acquérir des informations de caractéristiques de l'image ;
un module de détermination (92) configuré de manière à déterminer si les informations de caractéristiques de l'image acquises par le module d'acquisition d'informations de caractéristiques (91) correspondent à des informations de caractéristiques d'une bibliothèque de caractéristiques préétablie, la bibliothèque de caractéristiques comprenant des informations de caractéristiques appartenant à une image artificielle ; et
un quatrième module de détermination (93) configuré de manière à, lorsque le module de détermination (92) détermine que les informations correspondent, déterminer que l'image est une image artificielle.

7. Programme informatique qui, lorsqu'il est exécuté sur un processeur d'un dispositif terminal, met en œuvre un procédé selon l'une quelconque des revendications 1 à 3.
